# EUROPEAN PATENT APPLICATION

(11) **EP 3 496 042 A1**
(43) Date of publication of application: **12.06.2019**
(21) Application number: 18210168.3
(22) Date of filing: 04.12.2018
(51) Int. Cl.: G06T 7/80, G06T 3/00, G06T 7/13

(54) **SYSTEM AND METHOD FOR GENERATING TRAINING IMAGES**

(30) Priority: 05.12.2017 GB 201720250
(71) Applicant: Shortbite Ltd, Manchester, Greater Manchester M15 6SE (GB)
(72) Inventor: Fergie, Martin, Manchester, Greater Manchester M15 6SE (GB); Higham, David, Manchester, Greater Manchester M15 6SE (GB)
(74) Representative: Dentons UK and Middle East LLP

(57) **Abstract**

A computer implemented system and method for automatically generating a training set of image comprises obtaining an image in which each pixel represents a 3 dimensional '3D' point on the surface of a sphere, obtaining a projective camera model comprising a projection matrix which defines a projective transformation to map 3D points on the surface of a sphere onto an image plane based on camera model parameter values, applying the projective camera model with selected camera model parameter values to the image to produce a rectilinear image; storing the rectilinear image in association with the selected camera model parameter values; and repeating the applying and storing for different selected camera model parameter values.

## Description

The present application relates to a system and method for generating training images for a computer vision system.

### Background

In the field of computer vision a common requirement is to be able to construct from an image a camera model of the camera, or camera and lens combination, which was used to capture the image. This generally requires solving the inverse of the imaging process in order to determine the parameter values of a camera model of the camera which was used to capture the image. Commonly a camera model may comprise parameters such as the focal length of the camera lens, pixel skew, principal point, and parameters for a lens distortion model. These camera parameters are often referred to as intrinsic camera parameters.

A known approach to generating a camera model is to estimate the values of the parameters of the camera model by analysis of images captured by the camera. This estimation may be carried out, for example, by analysis of a captured image of a checkerboard pattern, by analysis of sets of corresponding points found in stereo images, or by analysis of sets of estimated vanishing points identified in captured images.

It has been proposed to use machine learning methods to produce a system able to estimate a camera model directly from images captured by the camera to be modelled, for example by the use of neural networks such as convolutional neural networks. However, in practice there are problems with this approach because a machine learning process, such as training a convolutional neural network, will require a training dataset comprising a large number of training images each associated with known camera model parameters of the camera used to capture the image. These known camera model parameters associated with the training images may be referred to as the ground truth camera models corresponding to the training images. Typically, a machine learning process may require a training dataset of several tens of thousands of images together with the corresponding ground truth camera model parameters.

Current methods of generating such training datasets typically require acquiring suitable images and then determining the camera parameters from metadata associated with the different images, such as Exchangeable Image File format (EXIF) metadata. This metadata may identify the camera device and the focal length of the lens used to capture the image. The physical size of the camera sensor can then be determined from the technical specifications of the identified camera device, and used, together with the focal length of the lens, to produce the ground truth camera model parameters associated with each image.

However, there are problems with this approach. The required metadata and technical specifications are typically only available for a restricted number of cameras and lenses, so that the training image datasets produced have only a limited range of variability in the associated intrinsic camera models. Further, in practice, errors and inaccuracies in the metadata associated with acquired images is common, making the derived ground truth camera model parameters unreliable. Further, the generation of a large training dataset in this way is labour intensive, time consuming and costly. Further, this approach cannot produce training image datasets including camera parameters which are not included in the metadata, such as lens distortion.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A system and method is provided for generating a training set of images by applying a projective camera model comprising a projection matrix to a spherical image to produce a number of rectilinear images corresponding to different camera model parameter values.

In a first aspect, the present disclosure provides a computer implemented system for automatically generating a training set of images, the system comprising: first obtaining means arranged to obtain an image in which each pixel represents a 3 dimensional '3D' point on the surface of a sphere; second obtaining means arranged to obtain a projective camera model comprising a projection matrix which defines a projective transformation to map 3D points on the surface of a sphere onto an image plane based on camera model parameter values: applying means arranged to apply the projective camera model with selected camera model parameter values to the image to produce a rectilinear image; storing means arranged to store the rectilinear image in association with the selected camera model parameter values; and the system being arranged to repeat the applying and storing for different selected camera model parameter values.

Preferably, the first obtaining means is further arranged to: obtain an equirectangular image; and transform the equirectangular image into a transformed image in which each pixel represents a 3D point on the surface of a sphere.

Preferably, the second obtaining means is arranged to randomly select the camera model parameter values.

Preferably, the second obtaining means is arranged select the camera model parameter values according to a predetermined sequence.

Preferably, the predetermined sequence is a pseudo-random sequence.

Preferably, the applying means is arranged to apply the projective camera model with a selected orientation.

Preferably, the applying means is arranged to randomly select the selected orientation.

Preferably, the applying means is arranged to select the selected orientation according to a predetermined sequence.

Preferably, the predetermined sequence is a pseudo-random sequence.

Preferably, the camera model parameter values are intrinsic camera parameters.

Preferably, the intrinsic camera parameters comprise one or more of: focal length, pixel skew, principal point, or lens distortion.

Preferably, the system further comprising filtering means arranged to filter the produced rectilinear image to determine whether to accept the rectilinear image for use as a training image, wherein the storing means stores the rectilinear image in association with the selected camera model parameter values only if the rectilinear image is accepted by the filtering means.

Preferably, the filtering means is arranged to: perform line segment extraction on the rectilinear image; compare the number of line segments identified to a first predetermined threshold; and accept the rectilinear image if the result of the comparison is that the number of line segments exceeds the first predetermined threshold.

Preferably, the system further comprising image count means arranged to maintain a count of the number of rectilinear images which are derived from an image, wherein the system is arranged to obtain another image when the count reaches a predetermined number.

Preferably, the image count means is arranged to maintain a count of the number of rectilinear images which are derived from an image and stored.

In a second aspect, the present disclosure provides a computer implemented method of automatically generating a training set of images, the method comprising: obtaining an image in which each pixel represents a 3 dimensional '3D' point on the surface of a sphere; obtaining a projective camera model comprising a projection matrix which defines a projective transformation to map 3D points on the surface of a sphere onto an image plane based on camera model parameter values: applying the projective camera model with selected camera model parameter values to the image to produce a rectilinear image; storing the rectilinear image in association with the selected camera model parameter values; and repeating the applying and storing for different selected camera model parameter values.

Preferably, the obtaining an image comprises: obtaining an equirectangular image; and transforming the equirectangular image into a transformed image in which each pixel represents a 3D point on the surface of a sphere.

Preferably, the selected camera model parameter values are randomly selected.

Preferably, the selected camera model parameter values are selected according to a predetermined sequence.

Preferably, the predetermined sequence is a pseudo-random sequence.

Preferably, the applying the projective camera model is carried out with a selected orientation.

Preferably, the selected orientation is randomly selected.

Preferably, the selected orientation is selected according to a predetermined sequence.

Preferably, the predetermined sequence is a pseudo-random sequence.

Preferably, the camera model parameter values are intrinsic camera parameters.

Preferably, the intrinsic camera parameters comprise one or more of: focal length, pixel skew, principal point, or lens distortion

Preferably, the method further comprising filtering the produced rectilinear image to determine whether to accept the rectilinear image for use as a training image, and storing the rectilinear image in association with the selected camera model parameter values only if it is accepted.

Preferably, the filtering comprises: performing line segment extraction on the rectilinear image; comparing the number of line segments identified to a first predetermined threshold; and accepting the rectilinear image if the result of the comparison is that the number of line segments exceeds the first predetermined threshold.

Preferably, the method further comprising: maintaining a count of the number of rectilinear images which are derived from an image; and when the count reaches a predetermined number, obtaining another image.

Preferably, the maintained count is of the number of rectilinear images which are derived from an image and stored.

In a third aspect, the present disclosure provides a computer program comprising computer readable instructions which, when executed by a processor of a computer cause the computer to carry out the method of the second aspect.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a explanatory diagram of an equirectangular image;
Figure 2 is an example of an equirectangular image;
Figure 3 is a schematic diagram of a system for generating a training set of images according to a first embodiment;
Figure 4 is a schematic flow chart of a method for generating a training set of images used in the first embodiment;
Figure 5 is a more detailed schematic diagram of modules of the system of the first embodiment;
Figures 6a to 6f are explanatory diagrams showing rectilinear images produced by different samples from the image of figure 2; and
Figures 7a to 7d show explanatory diagrams of some concepts used in operation of the system of the first embodiment.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The present disclosure is based upon the concept of using equirectangular images to generate a training set of images suitable for use in a machine learning process. For example, the training set of images may be used in training a neural network such as a convolutional neural network.

Equirectangular images are images of a scene captured using a spherical camera model, such that each image point or pixel in the captured image represents a point on the surface of a sphere intersecting a ray cast from the optical center of the spherical camera model out into the real world. An equirectangular image may also be referred to as a equirectangular projection.

Equirectangular images represent all points in a full imaged sphere without any transformation or scaling. Conventionally the imaged sphere comprises 360° horizontally and 180° vertically, and as a result the equirectangular image will have an aspect ration of 2:1. In an equirectangular image, all verticals remain vertical, while the horizon becomes a straight horizontal line across the middle of the image, and the zenith and nadir points (i.e. the upper and lower poles of the sphere) are located at the top and bottom edges of the image respectively, and are stretched to the entire width of the image.

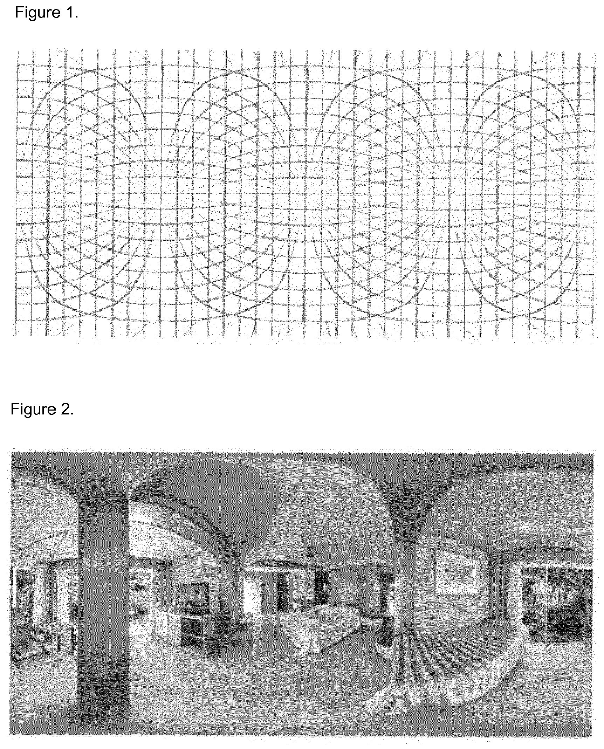

Figure 1 shows a diagrammatic illustration of the geometry of an equirectangular image. The curved lines in figure 1 show the paths that straight lines in an imaged real-world scene will appear to take when they captured in an equirectangular image. Figure 2 shows an example of an equirectangular image of a room interior.

In the present disclosure equirectangular images are used to generate synthetic rectilinear images which contain corresponding image content to parts of the equirectangular images, but appear as if they are rectilinear images which have been generated by camera models having selected specific camera parameters, and in particular specific focal lengths. These synthetic rectilinear images and their associated apparent camera parameters, such as focal lengths, can then be used to generate a training set of images for use in machine learning.

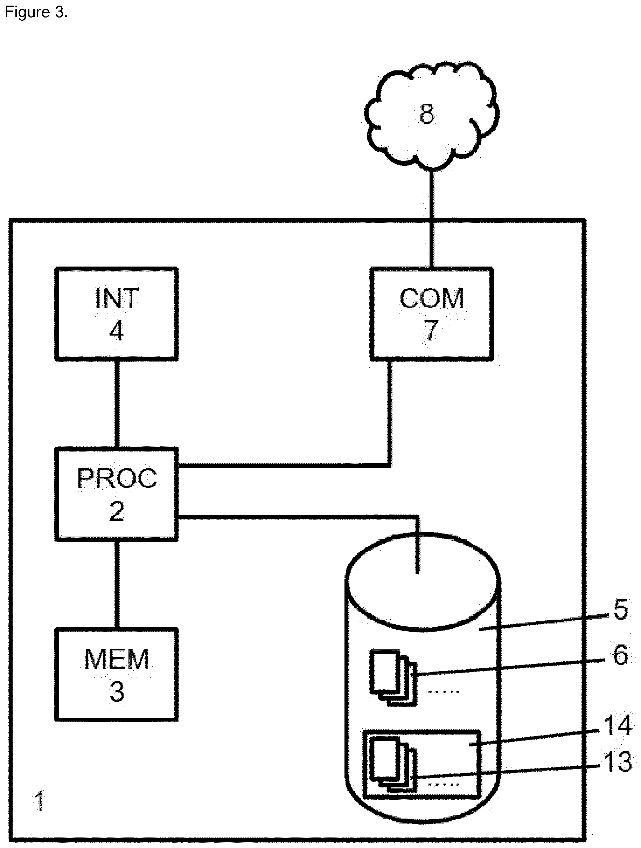

Figure 3 illustrates a system for producing a training set of images and associated imaging information according to a first embodiment. In the illustrated example the system is intended to produce a training set of images and associated imaging information suitable for use to train a machine learning system to determine from an image the camera parameters of the camera used to generate the image.

In Figure 3, an image training set generation system 1 is shown. The image training set generation system 1 comprises a processor 2 and a memory 3. The memory 3 stores instructions, such as programs, providing operating instructions for the processor 2, and also stores other data used or generated during operation of the image training set generation system 1, as will be discussed in more detail below. The image training set generation system 1 further comprises a user interface 4. The user interface 4 enables instructions to be input to the system 1 by a user, and information to be provided to the user by the image training set generation system 1.

The image training set generation system 1 further comprises an image store 5 containing a plurality of equirectangular images 6.

The system 1 further comprises a communications module 7. In the illustrated embodiment of figure 1 the communications module 7 is connected to a communications network 8. In the illustrated example the communications network 8 is the Internet. In other examples the communications module 7 may alternatively or additionally connect the system 1 to other private or public communication networks.

The communications network 8 is shown schematically in figure 1. It will be understood that the network 1 may in practice comprise a very large number of components, but these are not described or shown to improve clarity and to avoid obscuring the scope of the present invention. In practice, the communications network 8 may also be connected to other networks. To improve clarity, such other networks are not shown in figure 1.

In the illustrated example the system 1 may comprise a server connected to the communications network 8 and providing services to remote users.

In a first example of operation of the system 1, the system 1 may receive instructions to generate a training set of images made up of a specified number of rectilinear images corresponding to a number of specified camera models. Each camera model has a set of defined camera parameters. In the illustrated example each specified camera model has a set of defined values for the parameters focal length, pixel skew, principal point, and lens distortion. These parameters are generally known as the intrinsic camera parameters of a camera model. The specified number of rectilinear images in the training set of images may be large, for example, several tens of thousands of images.

In some examples the system 1 may receive the instructions to generate a training set of images from a remote user through the communications network 8, via the communications module 7. In other examples the system 1 may receive the instructions to generate a training set of images through the user interface 4.

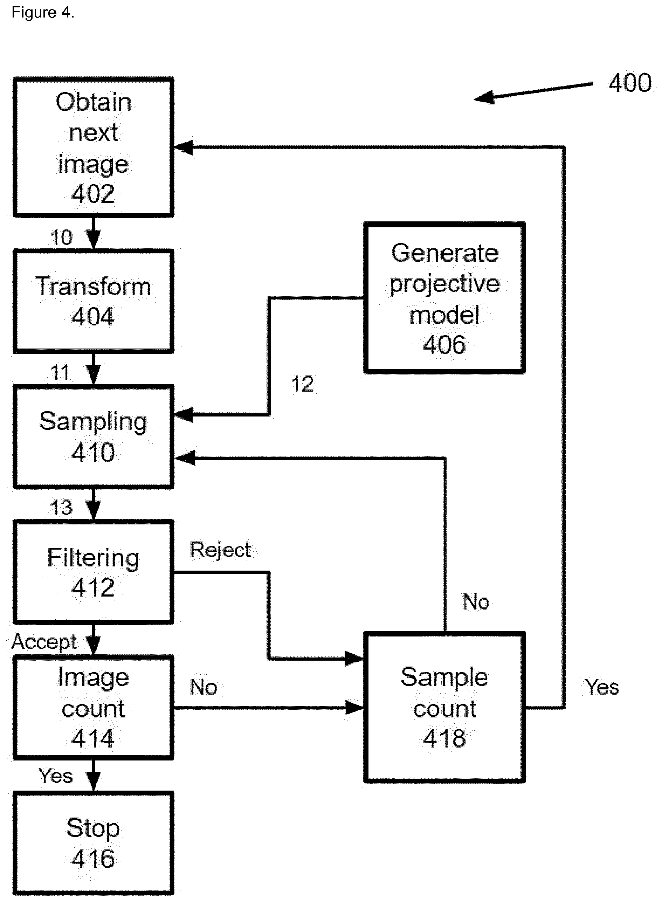

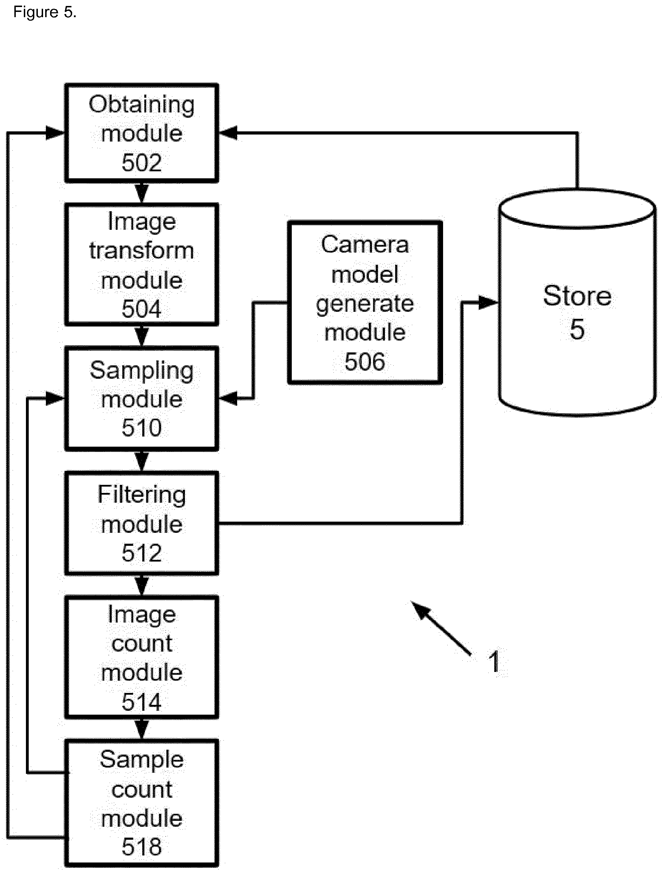

Figure 4 shows a flow chart of a method 400 used by the system 1 of the first embodiment shown in figure 1 to produce a training set of images and associated imaging information. Figure 5 shows an arrangement of functional modules used by the system 1 of the first embodiment to carry out the method of figure 4 and so produce the training set of images and associated imaging information. In the illustrated embodiment the functional modules are software modules executed by the processor 2.

The method 400 begins with an obtain next equirectangular image step 402, in which an equirectangular image obtaining module 502 of the system 1 obtains an equirectangular image 10 from the plurality of equirectangular images 6 stored in the image store 5.

Next, in an image transformation step 404, an image transformation module 504 of the system 1 transforms each pixel of the obtained equirectangular image such that it represents a 3 dimensional (3D) point on the surface of a sphere, and generates a transformed image 11. The transformed image 11 may be referred to as a spherical image. The skilled person will be aware of a number of known ways of carrying out such a transformation. Accordingly, the transformation does not need to be described in detail herein.

Thus, the obtain next equirectangular image step 402 and the image transformation step 404 collectively obtain an image in which each pixel represents a 3D point on the surface of a sphere. These steps are carried out by the equirectangular image obtaining module 502 and the image transformation module 504, which collectively form a first obtaining means which obtains an image in which each pixel represents a 3D point on the surface of a sphere.

In a generate projective camera model step 406 a projective camera model 12 is generated by a camera model generator module 506 of the system 1. The projective camera model 12 comprises a projection matrix which defines a projective transformation to map 3D points on the surface of a sphere onto an image plane based on the parameter values of the intrinsic camera parameters of a camera model or camera and lens model, that is the parameter values of the parameters focal length, pixel skew, principal point, and lens distortion. Accordingly, if a set of intrinsic camera parameters of a specific camera model are selected and incorporated into the projection camera model 12, applying the projection matrix of the projection camera model 12 to 3D points on the surface of a sphere will produce a synthetic rectilinear image corresponding to the scene represented by the 3D points as it would be imaged by a camera with intrinsic camera parameters according to that specific camera model. Thus, the generate projective camera model step 406 generates a projective camera model. This is carried out by the camera model generator module 506, which forms a second obtaining means which obtains the projective camera model

Then, in a sampling step 410, a sampling module 510 of the system 1 produces a rectilinear image by applying the projection matrix of the projection camera model 12 produced in the generate projective camera model step 406 with a set of intrinsic camera parameters corresponding to a randomly selected one of the specified camera models to the transformed equirectangular image 11 produced in the image transformation step 404, and having a random orientation. This application may be referred to as sampling because the applied set of intrinsic camera parameters is one sample of the possible sets of intrinsic camera parameters. This application or sampling produces a synthetic rectilinear image 13 corresponding to the scene shown in the equirectangular image as it would be imaged by a camera with intrinsic camera parameters according to the set of intrinsic camera parameters of the randomly selected one of the specified camera models. Accordingly, the sampling produces a synthetic rectilinear image 13.

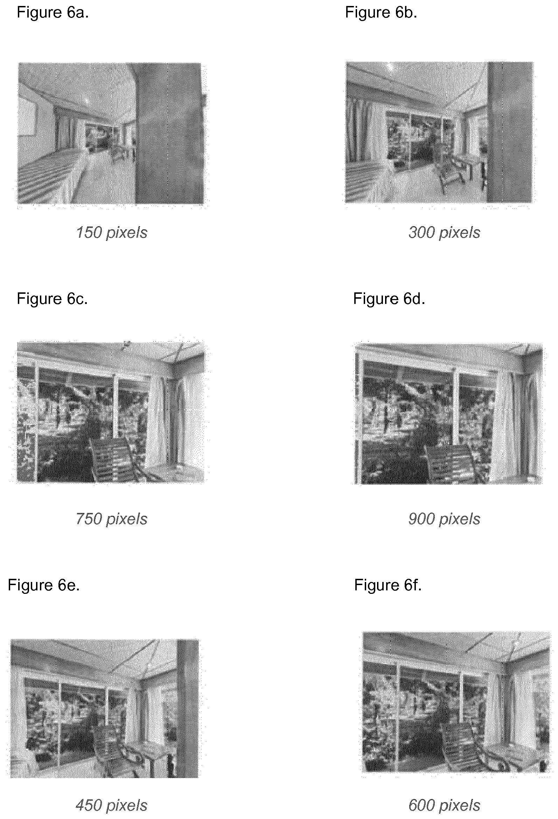

As an explanatory example, figures 6a to 6f show respective examples of rectilinear images produced by sampling the equirectangular image of claim 2 using different intrinsic camera parameters. To improve clarity only one intrinsic camera parameter has been varied between the images of figures 6a to 6f. All of figures 6a to 6f have the same principal point, and are shown with the same pixel skew and distortion parameters. Each of figures 6a to 6f shows an image corresponding to a different focal length, figure 6a corresponds to a camera model having a focal length parameter of 150 pixels, figure 6b corresponds to a camera model having a focal length parameter of 300 pixels, figure 6c corresponds to a camera model having a focal length parameter of 450 pixels, figure 6d corresponds to a camera model having a focal length parameter of 600 pixels, figure 6e corresponds to a camera model having a focal length parameter of 750 pixels, and figure 6f corresponds to a camera model having a focal length parameter of 900 pixels.

Then, in a filtering step 412, a filtering module 512 of the system 1 filters the synthetic rectilinear image13 to determine whether to accept it as suitable for use as a training image, or to reject it. In the filtering step 412, the filtering module 512 performs line segment extraction on the synthetic rectilinear image 13, and compares the number of identified line segments to a predetermined threshold. If the number of line segments identified in the synthetic rectilinear image 13 exceeds the threshold the synthetic rectilinear image 13 is accepted. Otherwise, if the number of line segments identified in the synthetic rectilinear image 13 does not exceed the threshold the synthetic rectilinear image 13 is rejected.

When a synthetic rectilinear image 13 is accepted by the filtering module 512 in the filtering step 412 the filtering module 512 sends the synthetic rectilinear image 13 to the image store 5 for storage in association with the corresponding set of intrinsic camera parameters. The accepted synthetic rectilinear images 13 and associated intrinsic camera parameters are stored in the image store 5 to form a training set 14 of images. The method 400 continues to an image count step 414 as discussed below.

When a synthetic rectilinear image 13 is rejected by the filtering module 512 in the filtering step 412 the rejected synthetic rectilinear image 13 is deleted, and the method 400 continues to a sample count step 418 as discussed below.

In the illustrated example where the training set 14 of images is to be used to train a machine learning system to determine from an image the camera parameters of the camera used to generate the image, it is desirable that each of the images of the training set 14 of images contains image features useable to determine intrinsic camera parameters. However, because the sampling is random, and does not take into account the image content of the equirectangular image, it is possible that some of the synthetic rectilinear images may not be suitable for use as training images. For example, some of the synthetic rectilinear images may show only a uniform blank wall or an area of empty sky, and so have no image content suitable for machine learning. The inclusion of such images without useful content in a training set 14 of images may reduce the usefulness of the training set 14 of images for training. Accordingly the inclusion of the filtering step 412 may provide an improved training set of images.

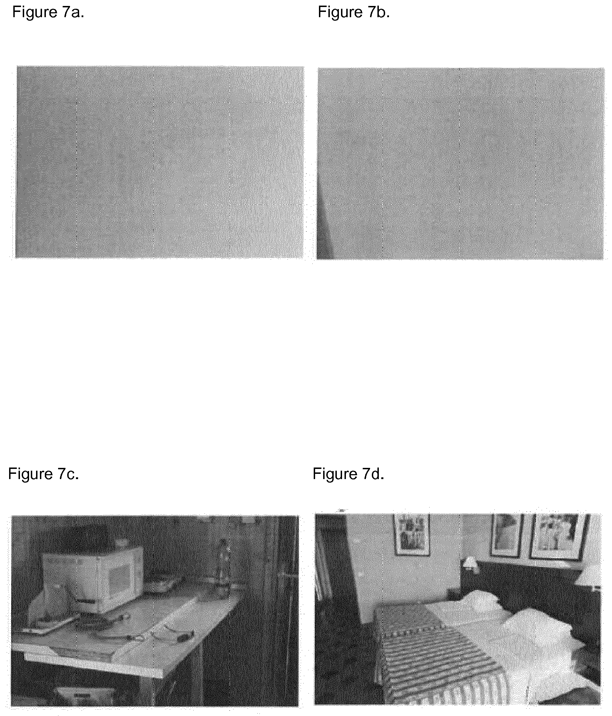

As an explanatory example, figures 7a and 7b show examples of rectilinear images produced by sampling an equirectangular image which contain no useful image content for training. In contrast, figures 7c and 7d show examples of rectilinear images produced by sampling an equirectangular image which contain useful image content for training. In the illustrated example it is expected that the filtering module 512 will reject the images of figures 7a and 7b as containing fewer identifiable line segments than the predetermined threshold, and accept the images of figures 7c and 7d as containing more identifiable line segments than the predetermined threshold.

As is explained above, if the synthetic rectilinear image 13 is accepted by the filtering module 512 in the filtering step 412 the filtering module 512 sends the synthetic rectilinear image 13 to the image store 5. Further, the method 400 moves to an image count step 414. In the image count step 414 an image count module 514 increments a count of how many synthetic rectilinear images 13 have been accepted and sent to the image store 5, and determines whether the count has reached the specified number of rectilinear images for the instructed training set of images. If the determination is "yes", the count has reached the specified number, the method 400 stops in a stop step 416. Otherwise, if the determination is "no", the count has not reached the specified number, the method 400 continues to the sample count step 418 as discussed below.

As is explained above, following rejection of the synthetic rectilinear image 13 in the filtering step 412, or a determination in the image count step 414 that the image count has not reached the specified number, the method 400 moves to the sample count step 418. In the sample count step 418 a sample count module 518 increments a count of how many times a current equirectangular image 10 has been sampled, and determines whether the count is above a predetermined threshold. If the determination is "no", the count is not above the predetermined threshold, the method returns to the sampling step 410 so that another sample is made from the current equirectangular image 10. If the determination is "yes", the count is above the predetermined threshold, the count is reset to zero, and the method returns to the obtain next equirectangular image step 402 to obtain a new equirectangular image.

In principle, an extremely large number of different samples can be taken from a single equirectangular image. In a digital system the number of possible unique combinations of camera model parameter values and directions is finite, although extremely large, although this number can be regarded as effectively infinite for many practical purposes. However, if a large number of samples are taken from a single equirectangular image and used as a training set of images, the resulting training set of images may be lacking in diversity of image content, and this may limit the effectiveness of the training set of images. Accordingly, setting the threshold in the sample count step 414 to limit the maximum number of samples taken from each equirectangular image may provide an improved training set of images.

Accordingly, the method 400 will generate a training set 14 of images comprising a number of synthetic rectilinear images 13 and associated intrinsic camera parameters, the intrinsic camera parameters associated with each of the synthetic rectilinear images defining the ground truth camera model corresponding to that image.

The generated training set of images14 can then be sent to the user from the image store 5 through the communications network 8, via the communications module 7.

The disclosed method of generating a training set of images allows a training set comprising a large number of images each together with corresponding ground truth camera model parameters to be generated without any inaccuracies or errors in the ground truth camera model parameters. Further, the disclosed method allows the training set of images and corresponding ground truth camera model parameters to be generated for any desired camera model. Further, the disclosed method allows the training set of images and corresponding ground truth camera model parameters to be generated quickly, automatically, and cheaply. Further, the disclosed method allows lens distortion to be included in the ground truth camera model parameters of the training set of images.

In the illustrated example a training set of images is generated for use in training a machine learning process to determine from an image the camera parameters of the camera used to capture the image. In other examples the training set of images may be for use in training a machine learning process to carry out other tasks.

In the illustrated example a single image store 5 is used to store the equirectangular images and the generated training set of images. In other examples these may be stored in different data stores.

In the illustrated example the image store 5 is a part of the system 1. In other examples the image store 5 may be located remotely from the other parts of the system 1.

In the illustrated example the instructions specify a number of camera models to be used to generate the training set of images. In other examples the instructions may specify values, or ranges of values, of camera model parameters to be used instead of specific camera models. In such examples, in the sampling step, sets of randomly selected camera parameters may be used instead of a randomly selected camera model. In some examples the instructions may specify what number, or proportion, of the training set of images should correspond to each camera model or parameter value.

In the illustrated example the set of intrinsic camera parameters focal length, pixel skew, principal point, and lens distortion are used. In other examples one, some, or all of the parameters may be used. Further, in some other examples additional parameters may be used.

In the examples described above, in the sampling step the camera model or camera parameter values, and facing, used is selected randomly. In other examples these may be selected according to a predetermined sequence. In some examples the predetermined sequence may be a pseudo-random sequence.

In the illustrated example the method obtains an equirectangular image and transforms it into a transformed image. In other examples the equirectangular images could be stored in the transformed form, and an already transformed image could be used.

In the illustrated example the method is instructed to generate a training set of images made up of a specified number of rectilinear images corresponding to a number of specified camera models. In other examples the method may be used to generate a training image pool comprising a number of rectilinear images corresponding to a number of camera models, and a desired training set of images may be produced by selecting a suitable set of the rectilinear images from this training image pool. This selection may, for example, be carried out by selecting a specified number of rectilinear images corresponding to a number of specified camera models from the training image pool.

In examples where a training image pool is generated and subsequently selected from, in the sampling step the random selection may be carried out from among all possible, or all defined, camera models or camera parameter values, rather than being limited to camera models or camera parameter values specified in an instructed training set.

In examples where a training image pool is generated and subsequently selected from, in the image count step the specified number of rectilinear images may be the desired number of rectilinear images in the pool, rather than the number of rectilinear images for an instructed training set of images.

In the illustrated example the method uses a sample count step. As is explained above the sample count step may improve the quality of the generated training set of images. However, the use of a sample count step is not essential, and in some examples the sample count step may be omitted.

In the illustrated example the method uses a filtering step. As is explained above the filtering step may improve the quality of the generated training set of images. However, the use of a filtering step is not essential, and in some examples the filtering step may be omitted.

In the illustrated embodiment the communication network is the Internet. In alternative examples other networks may be used in addition to, or instead of, the Internet.

In the example described above the system may comprise a server. The server may comprise a single server or network of servers. In some examples the functionality of the server may be provided by a network of servers distributed across a geographical area, such as a worldwide distributed network of servers, and a user may be connected to an appropriate one of the network of servers based upon a user location. In alternative examples the system may be a stand alone system, or may be incorporated in some other system.

The above description discusses embodiments of the invention with reference to a single user for clarity. It will be understood that in practice the system may be shared by a plurality of users, and possibly by a very large number of remote users simultaneously.

The embodiment described above are fully automatic. In some alternative examples a user or operator of the system may instruct some steps of the method to be carried out.

In the illustrated embodiment the modules of the system are defined in software. In other examples the modules may be defined wholly or in part in hardware, for example by dedicated electronic circuits.

In the described embodiments of the invention the system 1 may be implemented as any form of a computing and/or electronic device.

Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

The computer executable instructions may be provided using any computer-readable media that is accessible by computing based device. Computer-readable media may include, for example, computer storage media such as a memory and communications media. Computer storage media, such as a memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media.

Although the system 1 is shown as a single device it will be appreciated that this system may be distributed or located remotely and accessed via a network or other communication link (e.g. using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A computer implemented system for automatically generating a training set of images, the system comprising:
first obtaining means arranged to obtain an image in which each pixel represents a 3 dimensional '3D' point on the surface of a sphere;
second obtaining means arranged to obtain a projective camera model comprising a projection matrix which defines a projective transformation to map 3D points on the surface of a sphere onto an image plane based on camera model parameter values:
applying means arranged to apply the projective camera model with selected camera model parameter values to the image to produce a rectilinear image;
storing means arranged to store the rectilinear image in association with the selected camera model parameter values; and
the system being arranged to repeat the applying and storing for different selected camera model parameter values.

2. The system according to claim 2, wherein the first obtaining means is further arranged to:
obtain an equirectangular image; and
transform the equirectangular image into a transformed image in which each pixel represents a 3D point on the surface of a sphere.

3. The system according to claim 1 or claim 2, wherein the second obtaining means is arranged to randomly select the camera model parameter values; or
wherein the second obtaining means is arranged to select the camera model parameter values according to a predetermined sequence; and
preferably, wherein the predetermined sequence is a pseudo-random sequence.

4. The system according to any one of claims 1 to 3, wherein the applying means is arranged to apply the projective camera model with a selected orientation.

5. The system according to claim 4, wherein the applying means is arranged to randomly select the selected orientation; or
wherein the applying means is arranged to select the selected orientation according to a predetermined sequence; and
preferably, wherein the predetermined sequence is a pseudo-random sequence.

6. The system according to any preceding claim, wherein the camera model parameter values are intrinsic camera parameters; and
preferably, wherein the intrinsic camera parameters comprise one or more of: focal length, pixel skew, principal point, or lens distortion.

7. The system according to any preceding claim, further comprising filtering means arranged to filter the produced rectilinear image to determine whether to accept the rectilinear image for use as a training image, wherein the storing means stores the rectilinear image in association with the selected camera model parameter values only if the rectilinear image is accepted by the filtering means; and.
preferably, wherein the filtering means is arranged to:
perform line segment extraction on the rectilinear image;
compare the number of line segments identified to a first predetermined threshold; and
accept the rectilinear image if the result of the comparison is that the number of line segments exceeds the first predetermined threshold.

8. The system according to any preceding claim, further comprising image count means arranged to maintain a count of the number of rectilinear images which are derived from an image, wherein the system is arranged to obtain another image when the count reaches a predetermined number; and.
preferably, wherein the image count means is arranged to maintain a count of the number of rectilinear images which are derived from an image and stored.

9. A computer implemented method of automatically generating a training set of images, the method comprising:
obtaining an image in which each pixel represents a 3 dimensional '3D' point on the surface of a sphere;
obtaining a projective camera model comprising a projection matrix which defines a projective transformation to map 3D points on the surface of a sphere onto an image plane based on camera model parameter values:
applying the projective camera model with selected camera model parameter values to the image to produce a rectilinear image;
storing the rectilinear image in association with the selected camera model parameter values; and
repeating the applying and storing for different selected camera model parameter values.

10. The method according to claim 9, wherein the obtaining an image comprises:
obtaining an equirectangular image; and
transforming the equirectangular image into a transformed image in which each pixel represents a 3D point on the surface of a sphere.

11. The method according to claim 9 or claim 10, wherein the selected camera model parameter values are randomly selected; or
wherein the selected camera model parameter values are selected according to a predetermined sequence; and
preferably, wherein the predetermined sequence is a pseudo-random sequence.

12. The method according to any one of claims 9 to 11, wherein the applying the projective camera model is carried out with a selected orientation.

13. The method according to claim 12, wherein the selected orientation is randomly selected; or
wherein the selected orientation is selected according to a predetermined sequence;and
preferably, wherein the predetermined sequence is a pseudo-random sequence.

14. The method according to any one of claims 9 to 13, wherein the camera model parameter values are intrinsic camera parameters; and
preferably, wherein the intrinsic camera parameters comprise one or more of: focal length, pixel skew, principal point, or lens distortion.

15. A computer program comprising computer readable instructions which, when executed by a processor of a computer cause the computer to carry out the method of any one of claims 9 to 14.
